# EUROPEAN PATENT APPLICATION

(11) **EP 2 808 195 A1**
(43) Date of publication of application: **03.12.2014**
(21) Application number: 12866623.7
(22) Date of filing: 26.01.2012
(51) Int. Cl.: B60L 11/18, H02J 7/00, H02J 13/00

(54) **ON-BOARD CHARGING AND COMMUNICATION DEVICE AND VEHICLE CHARGING AND COMMUNICATION SYSTEM**

(71) Applicant: Toyota Jidosha Kabushiki Kaisha, Toyota-shi, Aichi 471-8571 (JP)
(72) Inventor: OCHIAI, Yuta, Toyota-shi Aichi 471-8571 (JP); NAKAGAWA, Nobuyuki, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/051705
(87) International publication number: WO 2013/111311

(57) **Abstract**

In order to prevent a PLC modem belonging to an onboard electronic control unit from being activated in vain, an onboard charging communication device and a vehicular charging communication system according to the invention are equipped with an onboard battery that is charged by being supplied with power from an external charger via a charging cable, and the onboard electronic control unit, which has a power line communication function for establishing power line communication with the aforementioned external charger via the aforementioned charging cable through the use of the PLC modem. The aforementioned onboard electronic control unit further has PLC modem activation control means for activating the PLC modem if the aforementioned power line communication function is validated and stopping the PLC modem from being activated if the aforementioned power line communication function is not validated on the other hand.

## Description

### TECHNICAL FIELD

The invention relates to an onboard charging communication device and a vehicular charging communication system, and more particularly, to an onboard charging communication device and a vehicular charging communication system that are suited to reduce the amount of power consumption resulting from the activation of a PLC modem that is needed for an onboard electronic control unit to establish power line communication with an external charger that charges an onboard battery via a charging cable.

### BACKGROUND ART

Conventionally, there is known a vehicular charging communication system that charges an onboard battery mounted on a vehicle through the supply of power from an external charger (e.g., a charging stand installed at a gas station or the like, a commercial power supply installed in a house, or the like) (e.g., see Patent Document 1). This vehicular charging communication system is constituted of an external charger that can output power to the outside, an onboard battery that is charged by being supplied with power from the outside, and a charging cable that links the external charger and the onboard battery with each other. In this vehicular charging communication system, if the external charger is connected to the onboard battery via the charging cable, power can be supplied from the external charger to the onboard battery via the charging cable. Therefore, the onboard battery can be charged.

Besides, in the aforementioned vehicular charging communication system, when connected to each other via the charging cable, the vehicle and the external charger can establish power line communication (PLC communication) via the charging cable. The vehicle is equipped with an onboard electronic control unit that performs the control regarding the charging of the onboard battery. This onboard electronic control unit has a PLC modem as a communication device that is needed to establish power line communication with the external charger. If the external charger is connected to the onboard electronic control unit via the charging cable, this PLC modem is supplied with power from the external charger side, and can give/receive information for power line communication via the charging cable to/from the external charger. The onboard electronic control unit permits the charging of the onboard battery if an authentication is obtained from the external charger as a result of the aforementioned power line communication, and stops the charging of the onboard battery if the authentication is not obtained or the external charger is not connected via the charging cable on the other hand.

### Related Art Document

### Patent Document

Patent Document 1: Japanese Patent Application Publication No. 2006-262570 (JP-2006-262570 A)

### SUMMARY OF THE INVENTION

### Problem to Be Solved by the Invention

By the way, in the aforementioned vehicular charging communication system, if the vehicle is connected to the external charger via the charging cable, the PLC modem is always energized. In this configuration, however, the PLC modem is activated even when the onboard electronic control unit and the external charger do not establish power line communication with each other in a situation where the connection is made. Therefore, power may be consumed in vain.

For example, the onboard electronic control unit that includes the aforementioned PLC modem and establishes power line communication with the external charger through the use of the PLC modem may be endowed with a predetermined function that is different from this power line communication function (e.g., detection of the opening/closing of a door that can be validated when an ignition of the vehicle is OFF). In this configuration, at a timing when the predetermined function is validated while the power line communication function is not validated, a microcomputer section of the onboard electronic control unit needs to be activated. However, since power line communication is not established, there is no need to activate the PLC modem. However, if the entire onboard electronic control unit including the PLC modem is activated at this timing, power is consumed in vain. In particular, a battery is highly likely to run out if the predetermined function is validated when the ignition of the vehicle is OFF.

The invention has been made in view of the foregoing. It is an object of the invention to provide an onboard charging communication device and a vehicular charging communication system that can prevent a PLC modem belonging to an onboard electronic control unit from being activated in vain.

### Means for Solving the Problem

The aforementioned object is achieved by an onboard charging communication device. The onboard charging communication device is equipped with an onboard battery that is charged by being supplied with power from an external charger via a charging cable, and an onboard electronic control unit that has a power line communication function for establishing power line communication with the external charger via the charging cable through use of a PLC modem. The onboard electronic control unit further has PLC modem activation control means for activating the PLC modem if the power line communication function is validated, and stopping the PLC modem from being activated if the power line communication function is not validated on the other hand.

### Effect of the Invention

According to the invention, the PLC modem belonging to the onboard electronic control unit can be prevented from being activated in vain.

### BRIEF DESCRIPTION OF THE DRAWINGS

[FIG. 1] FIG. 1 is a block diagram of a vehicular charging communication system that includes an onboard charging communication device as one embodiment of the invention.
[FIG. 2] FIG. 2 is a flowchart of an example of a control routine that is executed in the onboard charging communication device according to this embodiment of the invention.

### MODE FOR CARRYING OUT THE INVENTION

A specific embodiment of an onboard charging communication device and a vehicular charging communication system according to the invention will be described hereinafter, using the drawings.

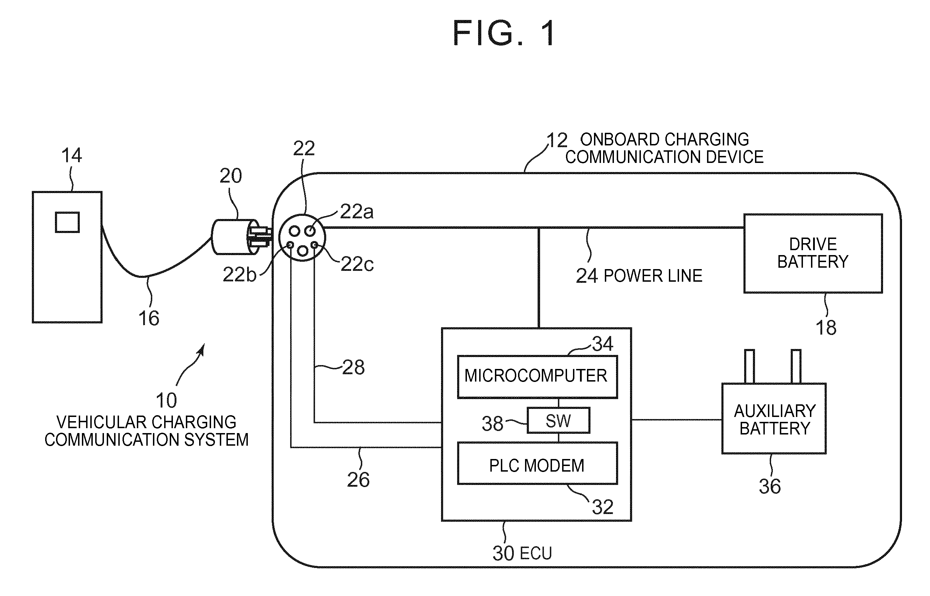

FIG. 1 is a block diagram showing a vehicular charging communication system 10 and an onboard charging communication device 12 as one embodiment of the invention. The vehicular charging communication system according to this embodiment of the invention includes an onboard charging communication device 12, an external charger (Electric Vehicle Supply Equipment; EVSE) 14, and a charging cable 16 that links the onboard charging communication device 12 and the external charger 14 with each other.

The onboard charging communication device 12 is mounted on a vehicle that has an onboard battery 18. This vehicle is a vehicle that can charge the onboard battery 18 through the use of the external charger 14, and is a vehicle that can travel by being electrically operated, for example, a plug-in vehicle, an electric vehicle, a fuel-cell vehicle or the like. The onboard battery 18 is a high-voltage direct-current power supply that can be charged/discharged, and is a secondary battery, for example, a nickel hydride battery, a lithium-ion battery or the like. The onboard battery 18 can be charged with power supplied from the external charger 14, can be charged with power generated by an onboard generator or the like, and can supply power to an onboard electric load including a drive motor that generates a driving force in the vehicle, and the like.

The external charger 14 is a charging stand that is installed at a gas station, a convenience store, a vehicle repair shop, a general household or the like, and can supply power to the vehicle that is connected via a later-described charging cable through the use of, for example, an external power supply (e.g., a commercial power supply) that is connected via a power receptacle. Besides, the external charger 14 can generate a control pilot signal (hereinafter referred to as a CPLT signal) as a pulse signal (i.e., a duty signal that can change both in ON-time and OFF-time) that periodically changes in state (voltage), and can generate predetermined communication data.

The CPLT signal is a signal that is given/received between a control circuit belonging to the external charger 14 and a control circuit belonging to the onboard charging communication device 12, and is a signal that indicates, for example, the advisability of the supply of power from the external charger 14 to the onboard charging communication device 12, a rated current of the external charger 14, or the like, and is needed to perform a process of charging the onboard charging communication device 12 from the external charger 14. Besides, the predetermined communication data are, for example, input ID data on a person who charges the onboard battery 18, data regarding the contents of the charging of the onboard charging communication device 12 from the external charger 14 and indicating a charging amount, a charging rate etc., and the like.

One end of the charging cable 16 is connected to the external charger 14. The charging cable 16 is attached to the external charger 14, and is integrated with the external charger to constitute the external charging device. The charging cable 16 includes at least a power line through which the power from the external charger 14 flows, and a signal line through which the CPLT signal flows. The external charger 14 can supply the power for charging the onboard battery 18 toward the onboard charging communication device 12 through the use of the power line of the charging cable 16, and can transmit the aforementioned generated predetermined communication data toward the onboard charging communication device 12. Besides, the external charger 14 can transmit the generated CPLT signal toward the onboard charging communication device 12 through the use of the signal line of the charging cable 16.

A charging connector 20 for connection to the onboard charging communication device 12 is provided at the other end of the charging cable 16. The charging connector 20 is a male connector including terminals that are connected to the aforementioned signal line and the aforementioned power line, which are included in the charging cable 16, respectively. The onboard charging communication device 12 is equipped with an insertion port 22 to which the charging connector 20, which is provided at the other end of the charging cable 16, can be connected. The insertion port 22 is a female inlet including terminals that are provided such that the number thereof corresponds to the number of the aforementioned power line and the aforementioned signal line, which are included in the charging cable 16, respectively.

The insertion port 22 is provided, for example, in the vicinity or the like of a vehicle body region in which the onboard battery 18 is arranged (e.g., a vehicle body rear portion, a vehicle body lateral portion, a vehicle body front portion or the like). The insertion port 22 has a power supply terminal 22a that can be connected to the power line of the charging cable 16, a CPLT terminal 22b that can be connected to the signal line of the charging cable 16, and a PISW terminal 22c that changes in voltage level depending on whether or not the charging connector 20 is connected to the insertion port 22, namely, whether or not the onboard charging communication device 12 and the external charger 14 are connected to each other via the charging cable 16. A sensor that detects the presence/absence of connection between the charging connector 20 and the insertion port 22, and the like are connected to the PISW terminal 22c. For example, a low-level voltage is applied when the charging connector 20 is not connected to the insertion port 22, and a high-level voltage is applied when the charging connector 20 is connected to the insertion port 22 on the other hand.

The power supply terminal 22a of the insertion port 22 and the onboard battery 18 are connected to each other via a power line 24. The power that has flowed from the external charger 14 through the power line of the charging cable 16 flows through the power line 24. The power from the external charger 14 flows through the power line 24, and is converted into a direct-current voltage to be then supplied to the onboard battery 18. The onboard battery 18 is charged by being supplied with direct-current power into which the power that has flowed from the external charger 14 through the power line 24 is converted.

The onboard charging communication device 12 is equipped with an electronic control unit (hereinafter referred to as an ECU) 30 that has a power line communication function for establishing power line communication (PLC communication) with the external charger 14 via the charging cable 16. The ECU 30 has a PLC modem 32 that is needed to establish power line communication with the external charger 14, and a microcomputer 34 that performs various kinds of control. The ECU 30 can establish power line communication with the external charger 14 through the use of the PLC modem 32, and perform a control process based on the power line communication through the use of the microcomputer 34.

The ECU 30 is connected to the aforementioned power line 24. The power that has flowed from the external charger 14 through the power line of the charging cable 16, and predetermined communication data that are transmitted from the external charger 14 to be superimposed on the power flow through the power line 24. The microcomputer 34 of the ECU 30 determines, on the basis of the state of the power line 24 (concretely, on the basis of the presence/absence of a voltage in the power line 24 or the presence/absence of a current in the power line 24), whether or not power flows through the power line 24 (a determination on the presence/absence of a voltage in the power line 24 / a determination on the presence/absence of a current in the power line 24).

Besides, the predetermined communication data that have flowed from the external charger 14 through the power line 24 are supplied to the ECU 30. The ECU 30 establishes power line communication with the external charger 14 by causing the PLC modem 32 to receive the predetermined communication data from the external charger 14. The microcomputer 34 of the ECU 30 performs a control process of, for example, authenticating whether or not the person who charges the onboard battery 18 is a possessor, driver or the like of a host vehicle, and counting a charging amount and a charging rate or indicating the charging amount or the charging rate, etc., in accordance with the predetermined communication data received by the PLC modem 32.

The CPLT terminal 22b of the insertion port 22 and the ECU 30 are connected to each other via the CPLT signal line 26. The CPLT signal that has flowed from the external charger 14 through the signal line of the charging cable 16 flows through the CPLT signal line 26. The CPLT signal from the external charger 14 is supplied to the ECU 30 through the CPLT signal line 26. The microcomputer 34 of the ECU 30 determines, on the basis of the state of the CPLT signal line 26 (concretely, on the basis of the presence/absence of a voltage in the CPLT signal line 26 or the presence/absence of a duty in the CPLT signal line 26), whether or not the CPLT signal from the external charger 14 is received. If it is determined that the CPLT signal supplied through the CPLT signal line 26 has been received, the microcomputer 34 makes determinations on the advisability of the supply of power from the external charger 14 to the vehicle 16, the rated current of the external charger 14, and the like, on the basis of a change in the state of the CPLT signal.

The PISW terminal 22c of the insertion port 22 and the ECU 30 are connected to each other via the PISW signal line 28. A voltage signal (a sensor signal) that is generated at the PISW terminal 22c is supplied to the ECU 30 through the PISW signal line 28. The microcomputer 34 of the ECU 30 detects a level of a voltage applied to the PISW terminal 22c, on the basis of a signal state of the PISW signal line 28. The microcomputer 34 determines, on the basis of a level of a voltage supplied through the PISW signal line 28, whether or not the charging connector 20 at the other end of the charging cable 16 is inserted in the insertion port 22 (i.e., whether or not the external charger 14 is connected to the host onboard charging communication device 12 via the charging cable 16).

The ECU 30 further has a power line communication function for establishing power line communication with the aforementioned external charger 14 via the charging cable 16 through the use of the PLC modem 32, and a predetermined function that is different from the power line communication function and is performed without using the PLC modem 32. This predetermined function can be validated when an ignition of the vehicle is OFF, and is, for example, detection of the opening/closing of a door, detection of the locking/unlocking of the door, smart collation between the vehicle and a mobile device carried by a user of the vehicle, or the like. The microcomputer 34 of the ECU 30 validates the predetermined function if a predetermined condition is fulfilled at predetermined timings that include at least a time when the ignition of the vehicle is OFF.

An auxiliary battery 36 is connected to the ECU 30. The auxiliary battery 36 is a power supply (e.g., a 12-V power supply) that is needed to operate the ECU 30 (concretely, the microcomputer 34 and the PLC modem 32), namely, to perform various functions including the functions of charging control of the onboard battery 18 by the ECU 30 and power line communication with the external charger 14 (including the activation of the PLC modem 32), and the predetermined function that can be validated when the aforementioned ignition is OFF. The auxiliary battery 36 supplies power to the ECU 30 when power should be supplied to the ECU 30, including the time when the ignition of the vehicle is OFF. The ECU 30 operates through the power supplied from the auxiliary battery 36. The auxiliary battery 36 is charged by being supplied with the power from the onboard battery 18 or by being supplied with the power generated by the onboard generator or the like.

Besides, in the ECU 30, the microcomputer 34 has an activation changeover switch 38 for selectively making a changeover between a state in which the supply of power from the auxiliary battery 36 to the PLC modem 32 is permitted and a state in which the supply of power from the auxiliary battery 36 to the PLC modem 32 is prohibited. As will be described later, if a predetermined condition is fulfilled, the microcomputer 34 permits the supply of power from the auxiliary battery 36 to the PLC modem 32 through the use of the activation changeover switch 38, thus activating the PLC modem 32. On the other hand, if the predetermined condition is not fulfilled, the microcomputer 34 prohibits the supply of power from the auxiliary battery 36 to the PLC modem 32 through the use of the activation changeover switch 38, thus stopping the PLC modem 32 from being activated.

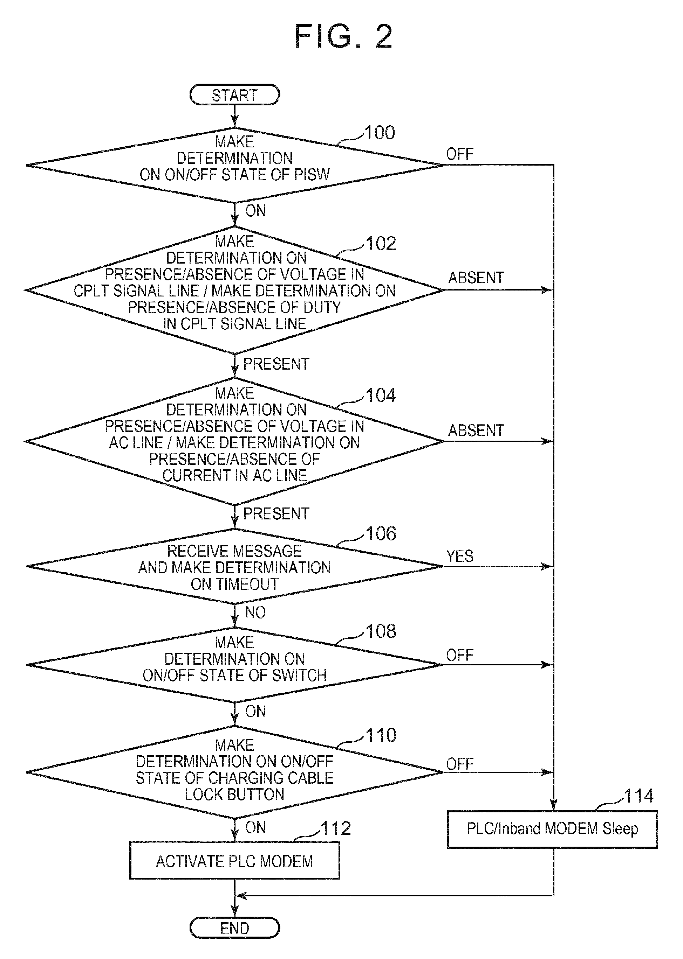

Next, the operation of the vehicular charging communication system 10 that is equipped with the onboard charging communication device 12 according to this embodiment of the invention will be described. FIG. 2 is a flowchart showing an example of a control routine that is executed by the ECU 30 in the onboard charging communication device 12 according to this embodiment of the invention.

In the onboard charging communication device 12 according to this embodiment of the invention, the microcomputer 34 of the ECU 30 performs, constantly in principle (i.e., when a +B power supply is ON), various control processes by being supplied with power from the auxiliary battery 36. Concretely, the microcomputer 34 can validate the predetermined function (e.g., detection of the opening/closing of the door, detection of the locking/unlocking of the door, or the like) that is different from the power line communication function and can be validated when the ignition of the vehicle is OFF, in a situation including the time when the ignition of the vehicle is OFF.

Besides, in a situation including the time when the ignition of the vehicle is OFF, the microcomputer 34 detects a level of a voltage applied to the PISW terminal 22c on a predetermined cycle, and determines, on the basis of the level of the voltage, whether or not the charging connector 20 at the other end of the charging cable 16 is inserted in the insertion port 22 (i.e., whether or not the external charger 14 is connected to the host onboard charging communication device 12 via the charging cable 16) (step 100; a determination on an ON/OFF state of the PISW). Incidentally, this microcomputer 34 makes a determination on the presence/absence of insertion of the charging connector 20 in the insertion port 22, on the basis of a state of the PISW signal line 28, concretely, on the basis of whether or not the voltage applied to the PISW signal line 26 is at a higher or lower level than a threshold voltage.

If it is determined in the aforementioned step 100 that the external charger 14 is connected to the host onboard charging communication device 12 via the charging cable 16, the microcomputer 34 subsequently determines whether or not the CPLT signal supplied from the external charger 14 has been received by the ECU 30 (step 102; a determination on the presence/absence of the CPLT signal line 26 / a determination on the presence/absence of a duty in the CPLT signal line 26). Incidentally, this microcomputer 34 makes a determination on the presence/absence of reception of the CPLT signal on the basis of the state of the CPLT signal line 26, concretely, on the basis of whether or not a voltage equal to or higher than a predetermined value is applied to the CPLT signal line 26, or on the basis of whether or not the voltage applied to the CPLT signal line 26 is a duty signal that periodically changes.

If it is determined in the aforementioned step 102 that the CPLT signal from the external charger 14 has been received by the ECU 30, the microcomputer 34 subsequently determines whether or not power flows through the power line 24 (step 104; a determination on the presence/absence of a voltage in the power line 24 / a determination on the presence/absence of a current in the power line 24). Incidentally, this microcomputer 34 makes a determination on the presence/absence of the flow of power through the power line 24, on the basis of the state of the power line 24, concretely, on the basis of whether or not a voltage equal to or higher than a predetermined value is applied to the power line 24 or on the basis of whether or not a current equal to or larger than a predetermined value flows through the power line 24.

If it is determined in the aforementioned step 104 that power flows through the power line 24, the microcomputer 34 subsequently determines whether or not a time when no response message is received from the external charger 14 reaches a predetermined time after the completion of transmission of a request message in power line communication with the external charger 14, namely, whether or not a timeout of reception of the response message has occurred (step 106). Incidentally, this predetermined time is determined in advance in power line communication with the external charger 14, and is set to a maximum time that is permitted as the time when the aforementioned response message is not received.

If it is determined in the aforementioned step 106 that the reception timeout has not occurred, the microcomputer 34 subsequently determines whether a predetermined switch in a CPLT circuit that receives the CPLT signal supplied through the CPLT signal line 26 is in an ON state or an OFF state (step 108). Incidentally, this predetermined switch is turned ON/OFF in accordance with detection of insertion/removal that indicates whether or not the charging connector 20 at the other end of the charging cable 16 is inserted in the insertion port 22. The predetermined switch is turned ON if the charging connector 20 is inserted in the insertion port 22, and is turned OFF if the charging connector 20 is not inserted in the insertion port 22.

If it is determined in the aforementioned step 108 that the predetermined switch in the CPLT circuit is in the ON state, the microcomputer 34 subsequently determines whether a lock button of the charging cable 16 is in an ON state or an OFF state (step 110). Incidentally, this lock button is turned ON if the charging cable 16 is inserted in the insertion port 22 and locked, and is turned OFF if the charging cable 16 is unlocked.

If it is determined in the aforementioned step 110 that the lock button of the charging cable 16 is in the ON state, the microcomputer 34 determines that there has arrived a communication timing when power line communication with the external charger 14 should be established via the charging cable 16 through the use of the PLC modem 32, and subsequently activates the PLC modem 32 through the power supplied from the auxiliary battery 36 by bringing the activation changeover switch 38 into a state in which the supply of power from the auxiliary battery 36 to the PLC modem 32 is permitted (step 112).

When desiring to charge the onboard battery 18 of the vehicle from the external charger 14, the user of the vehicle inserts the charging connector 20 at the other end of the charging cable 16 that is connected at one end thereof to the external charger 14, into the insertion port 22 of the vehicle to establish connection therebetween. If it is determined as a result of determinations in the aforementioned steps 100 to 110 that there has arrived a communication timing when the aforementioned power line communication should be established through the use of the PLC modem 32, the microcomputer 34 permits the supply of power from the auxiliary battery 36 to the PLC modem 32, thus activating the PLC modem 32.

If the PLC modem 32 is activated, the PLC modem 32 can receive predetermined communication data that are supplied from the external charger 14 via the charging cable 16. Therefore, power line communication between the ECU 30 and the external charger 14 is made possible. That is, in this case, the ECU 30 can validate the power line communication function through the use of the PLC modem 32 that is supplied with power from the auxiliary battery 36.

On the other hand, if it is determined in the aforementioned step 100 that the external charger 14 is not connected to the host onboard charging communication device 12 via the charging cable 16, if it is determined in the aforementioned step 102 that the CPLT signal from the external charger 14 has not been received, if it is determined in the aforementioned step 104 that power does not flow through the power line 24, if it is determined in the aforementioned step 106 that a reception timeout has occurred, if it is determined in the aforementioned step 108 that the predetermined switch in the CPLT circuit is in the OFF state, or if it is determined in the aforementioned step 110 that the lock button of the charging cable 16 is in the OFF state, the microcomputer 34 determines that there has not arrived a communication timing when power line communication with the external charger 14 should be established via the charging cable 16 through the use of the PLC modem 32, and subsequently stops the PLC modem 32 from being activated through the supply of power from the auxiliary battery 36 by bringing the activation changeover switch 38 into a state in which the supply of power from the auxiliary battery 36 to the PLC modem 32 is stopped (prohibited) (step 114).

If the PLC modem 32 is stopped from being activated, the PLC modem 32 becomes incapable of receiving the predetermined communication data that are supplied from the external charger 14 via the charging cable 16, so that power line communication between the ECU 30 and the external charger 14 is made impossible. That is, in this case, since the PLC modem 32 is not supplied with power from the auxiliary battery 36, the ECU 30 cannot validate the power line communication function through the use of the PLC modem 32.

In this manner, in the vehicular charging communication system 10 according to this embodiment of the invention, if the external charger 14 is connected to the onboard charging communication device 12 via the charging cable 16, the CPLT signal from the external charger 14 is received by the ECU 30, power flows through the power line 24, and both the predetermined switch in the CPLT circuit and the lock button of the charging cable 16 are in the ON state, the ECU 30 supplies power from the auxiliary battery 36 to the PLC modem 32 in the ECU 30 on the assumption that there has arrived a timing when the power line communication function for establishing power line communication with the external charger 14 via the charging cable 16 should be validated, namely, that a condition for establishing the power line communication is fulfilled, thus making it possible to activate the PLC modem 32.

On the other hand, if the external charger 14 is not connected to the onboard charging communication device 12 via the charging cable 16, if the CPLT signal from the external charger 14 is not received by the ECU 30, if power does not flow through the power line 24, if the predetermined switch in the CPLT circuit or the lock button of the charging cable 16 is in the OFF state, the ECU 30 prohibits the supply of power from the auxiliary battery 36 to the PLC modem 32 on the assumption that there has not arrived a timing when the aforementioned power line communication function should be validated, namely, that the condition for establishing the power line communication is not fulfilled, thus making it possible to stop the PLC modem 32 from being activated. The activation of the PLC modem 32 in the ECU 30 is stopped unless the aforementioned power line communication function is validated, even in the case where the microcomputer 34 has validated the predetermined function when the ignition of the vehicle is OFF.

That is, when the aforementioned power line communication function is validated, the ECU 30 activates the PLC modem 32 by turning the activation changeover switch 38 ON. On the other hand, when the aforementioned power line communication function is not validated, the ECU 30 stops the PLC modem 32 from being activated by turning the activation changeover switch 38 OFF. Besides, when the power line communication function is not validated even in the case where the predetermined function different from the power line communication function is validated, the ECU 30 does not activate the entirety including the PLC modem 32, but activates only those concerning the predetermined function except at least the PLC modem 32.

In consequence, according to the vehicular charging communication system 10 of this embodiment of the invention, the supply of power from the auxiliary battery 36 to the PLC modem 32 in the ECU 30 and the activation of the PLC modem 32 are not constantly carried out. The supply of power from the auxiliary battery 36 to the PLC modem 32 in the ECU 30 and the activation of the PLC modem 32 are carried out when power line communication is established or started between the onboard charging communication device 12 and the external charger 14 via the charging cable 16, and are stopped when the power line communication is not established or ended.

Thus, in the configuration according to this embodiment of the invention, the PLC modem 32 that is built in the ECU 30 can be prevented from being activated in vain, and the activated state of the PLC modem 32 can be prevented from continuing in vain over a long period of time. In particular, in the case where the predetermined function is validated when the ignition of the vehicle is OFF as well, the supply of power from the auxiliary battery 36 to the PLC modem 32 may be prohibited. Therefore, the amount of wasteful power consumption resulting from the activation of the PLC modem 32 can be reduced, and the battery of the auxiliary battery 36 can be restrained from running out.

Incidentally, if the amount of wasteful power consumption resulting from the activation of the PLC modem 32 can thus be reduced especially when the ignition of the vehicle is OFF, the amount of power brought out from the auxiliary battery 36 can be made small in the vehicle as a whole. Thus, according to this embodiment of the invention, the number of electric components that are supplied with power from the auxiliary battery 36 can further be increased, and the vehicle can be equipped with a large number of electric components.

By the way, in the aforementioned embodiment of the invention, the ECU 30 is equivalent to "the onboard electronic control unit" mentioned in the claims. "The PLC modem activation control means" mentioned in the claims is realized through the performance of the processes of steps 112 and 114 in the routine shown in FIG. 2 by the ECU 30. "The communication start timing determination means" and "the communication end timing determination means", which are mentioned in the claims, are realized through the performance of the processes of the respective steps 100 to 110 by the ECU 30.

Incidentally, in the aforementioned embodiment of the invention, power line communication of the predetermined communication data that should be communicated from the external charger 14 to the ECU 30 of the onboard charging communication device 12 is established through the use of the power line 24 through which the power supplied from the external charger 14 to the onboard battery 18 flows. However, the invention is not limited to this configuration. Power line communication of this predetermined communication data may be established through the use of the CPLT signal line 26 through which the CPLT signal that should be communicated from the external charger 14 to the ECU 30 flows.

Besides, in the aforementioned embodiment of the invention, in order to make determinations on the communication start timing when power line communication between the external charger 14 and the onboard charging communication device 12 should be started through the use of the PLC modem 32, and the communication end timing when the power line communication should be ended, the microcomputer 34 of the ECU 30 uses the result of determining, on the basis of the state of the PISW signal line 28, whether or not the external charger 14 is connected to the host onboard charging communication device 12 via the charging cable 16, the result of determining, on the basis of the state of the CPLT signal line 26, whether or not the CPLT signal from the external charger 14 has been received, the result of the determination on the presence/absence of the flow of power based on the state of the power line 24, and the like. However, the microcomputer 34 of the ECU 30 may use one or some of those determination results.

Incidentally, in the configuration in which the result of determining whether or not the CPLT signal from the external charger 14 has been received is used and on the other hand, the result of determining whether or not the external charger 14 is connected to the host onboard charging communication device 12 via the charging cable 16 is not used in order to make determinations on the communication start timing when power line communication between the external charger 14 and the onboard charging communication device 12 should be started through the use of the PLC modem 32 and the communication end timing when the power line communication should be ended, even in the case where the charging connector 20 at the other end of the charging cable 16 is inserted in the insertion port 22, if the CPLT signal from the external charger 14 has not been received by the ECU 30, the PLC modem 32 can be stopped from being activated upon determining that there has not arrived a communication timing when the aforementioned power line communication should be established through the use of the PLC modem 32, and on the other hand, only if the CPLT signal from the external charger 14 has been received by the ECU 30, the PLC modem 32 can be activated upon determining that there has arrived the aforementioned communication timing. If the CPLT signal has not been received by the ECU 30, it is impossible or difficult for the onboard charging communication device 12 to establish power line communication with the external charger 14 through the use of the PLC modem 32. In consequence, according to the configuration of the aforementioned modification example, the amount of wasteful power consumption can be reduced by further preventing the PLC modem 32 from being activated in vain, and the battery of the auxiliary battery 36 can be restrained from running out, in comparison with the configuration in which the PLC modem 32 is always activated if the charging connector 20 at the other end of the charging cable 16 is inserted in the insertion port 22.

Besides, in the aforementioned embodiment of the invention, in making a determination on the communication start timing when the aforementioned power line communication should be started, the microcomputer 34 makes a positive determination if all the aforementioned conditions are fulfilled, and makes a negative determination if at least one of the aforementioned conditions is not fulfilled. However, the microcomputer 34 may make a positive determination if at least one of the aforementioned conditions is fulfilled, and may make a negative determination if all the aforementioned conditions are not fulfilled.

Furthermore, in the aforementioned embodiment of the invention, the charging cable 16 that links the external charger 14 and the onboard charging communication device 12 with each other is attached to the external charger 14, and is integrated with the external charger 14 to constitute the external charging device. However, the invention is not limited to this configuration. The charging cable 16 may be mounted on the vehicle side, and may be connected to the external charger 14 when the onboard battery 16 is charged through the use of the external charger 14.

### DESCRIPTION OF REFERENCE SYMBOLS

- 10: VEHICULAR CHARGING COMMUNICATION SYSTEM
- 12: ONBOARD CHARGING COMMUNICATION DEVICE
- 14: EXTERNAL CHARGER
- 16: CHARGING CABLE
- 18: ONBOARD BATTERY
- 20: CHARGING CONNECTOR
- 22: INSERTION PORT
- 24: POWER LINE
- 26: CPLT SIGNAL LINE
- 28: PISW SIGNAL LINE
- 30: ELECTRONIC CONTROL UNIT (ECU)
- 32: PLC MODEM
- 34: MICROCOMPUTER
- 36: AUXILIARY BATTERY
- 38: ACTIVATION CHANGEOVER SWITCH

## Claims

1. An onboard charging communication device **characterized by** comprising:
an onboard battery that is charged by being supplied with power from an external charger via a charging cable; and
an onboard electronic control unit that has a power line communication function for establishing power line communication with the external charger via the charging cable through use of a PLC modem, and
**characterized in that**
the onboard electronic control unit further has PLC modem activation control means for activating the PLC modem if the power line communication function is validated, and stopping the PLC modem from being activated if the power line communication function is not validated on an other hand.

2. The onboard charging communication device according to claim 1, **characterized in that**
the onboard electronic control unit further has communication start timing determination means for determining whether or not the power line communication through the power line communication function is started, on the basis of whether or not the external charger is connected via the charging cable, whether or not a control pilot signal that is supplied from the external charger via the charging cable has been received, or whether or not power has been supplied from the external charger to the onboard battery via the charging cable, and communication end timing determination means for determining whether or not the power line communication has ended, and
the PLC modem activation control means activates the PLC modem if the communication start timing determination means determines that the power line communication is started, and stops the PLC modem from being activated if the communication end timing determination means determines that the power line communication has ended on an other hand.

3. The onboard charging communication device according to claim 1 or 2, **characterized in that**
the onboard electronic control unit is supplied with power from an auxiliary battery that is different from the onboard battery, and
the PLC modem activation control means activates the PLC modem by starting to supply power from the auxiliary battery to the PLC modem, and stopping the PLC modem from being activated by stopping supply of the power on an other hand.

4. The onboard charging communication device according to any one of claims 1 to 3, **characterized by** further comprising:
an insertion port into which a charging connector is inserted, one end of the charging cable connected to the external charger, and the charging connector provided at the other end of the charging cable, and
**characterized in that**
the onboard battery is charged by being supplied with power from the external charger via the charging cable and the power line, one end of a power line connected to the insertion port, and the onboard battery connected to the other end of the power line, and
the power line communication that is established by the onboard electronic control unit with the external charger is carried out by giving/receiving a signal that is superimposed on power flowing through the power line or is superimposed on a control pilot signal flowing through a signal line that is connected at one end thereof to the insertion port and at the other end thereof to the onboard electronic control unit.

5. A vehicular charging communication system including:
a vehicle that is mounted with the onboard charging communication device according to any one of claims 1 to 4; and
an external charging device that is equipped with the external charger and the charging cable.
